# EUROPEAN PATENT APPLICATION

(11) **EP 1 835 366 A1**
(43) Date of publication of application: **19.09.2007**
(21) Application number: 04822576.7
(22) Date of filing: 07.12.2004
(51) Int. Cl.: G05B 19/05

(54) **AUTOMOBILE CONTROLLER, AND ITS SOFTWARE CREATING METHOD AND SYSTEM**

(71) Applicant: HITACHI, LTD., Chiyoda-ku Tokyo 100-8280 (JP)
(72) Inventor: NARISAWA, Fumio HITACHI, LTD., Chioda-ku, Tokyo 100-8220 (JP); MAYAMA, Kazunori HITACHI, LTD., Chiyoda-ku, Tokyo 100-8220 (JP); TSUNEDOMI, Kunihiko HITACHI, LTD., Chiyoda-ku, Tokyo 100-8220 (JP)
(74) Representative: Beetz & Partner
(86) International application number: PCT/JP2004/018197
(87) International publication number: WO 2006/061884

(57) **Abstract**

In a processing description part 180, macros are used to describe processing in layers L1 and L2 with labels in each layer. A hierarchical configuration description part 191 defines the relation of connection between layers with macros of labels in each layer. An identifier expanding part 192 performs macro expansion. When these parts and a compiler 914 are used, control software that includes only a single expanded layer is obtained.

The software obtained is stored in, for example, a ROM 205 or the like in a control unit 200 in an automobile controller.

Accordingly, the processing description part 180 can be layered in an easy to understand manner, and thus person-hours for software modification can be localized when hardware or the control method is modified. Furthermore, execution speed of applications can be increased and the necessary capacity of the storage device can be reduced.

## Description

### (Technical Field)

The present invention relates to an automobile controller, as well as a method of and a system for generating software for a microprocessor constituting part of the automobile controller.

### (Background Art)

Microprocessors including a CPU, a ROM, a RAM, an input/output signal processor, and other components have been used as controllers intended for automobile engine control and the like. Software installed in this type of microprocessor comprises application programs that perform control processing and device drivers that perform input and output operations so that a desired control operation is achieved. When hardware used is modified, the device drivers for input and output operations are easily affected and a large number of person-hours involved in the modification become problematic.

Modifications of hardware are broadly classified into two types; modifications of sensors and actuators that are subject to control and modifications of the microprocessor that performs control. When a sensor, an actuator, or other hardware subject to control is modified, software is developed so that a target control operation is achieved, with reference to a hardware manual or another document in which its characteristics and specifications are described. When the microprocessor is modified, many person-hours are needed to extract portions to be modified, determine new specifications, perform a modification, and verify the modification with reference to a manual in which the specifications of the microprocessor are described.

To reduce person-hours required for a software modification involved in a hardware modification, UNIX (a registered trademark), which is a general-purpose operating system (OS) intended for information systems, is available, as disclosed in Non-patent Document 1. In UNIX, interfaces to the hardware subject to control are classified into three standard interfaces, which are block-type interfaces, message channel-type interfaces, and character-type interfaces. All input/output programs each use any one of the three types of virtual interfaces. Accordingly, software is structured with three layers, which are applications, virtual drivers, and actual driver programs, enabling application programs to be developed without having to worry about the modification of the hardware.

In Patent Document 1, a device driver is divided into three layers so that a modification of a program responsive to a modification of a device can be localized.

In Non-patent Document 2, a device driver is created as a high-order driver and a low-order driver; the high-order driver uses an interface for the low-order driver to perform processing, eliminating effects by modifications of the microprocessor and other hardware.

In a known technique to speed up processing performed through an interface, macros are used for expansion. The calling of the processing performed through an interface is speeded up by macro substitution, as disclosed in Patent Document 2.

Non-patent Document 1: S. J. Leffler, et al., translated by Akira Nakamura, et al., The Design and Implementation of the 4.3 BSD UNIX Operating System, Maruzen Co., Ltd. (1991)
Patent Document 1: Japanese Patent Laid-open No. 2000-97102
Non-patent Document 2: µITRON4.0 Specification Study Group, Device Driver Design Guides, µITRON4.0 Specification Study Group (1999)
Patent Document 2: Japanese Patent Laid-open No. 2002-287981

### DISCLOSURE OF INVENTION

### (Problems to be Solved by the Invention)

However, in processing performed by general preprocessors, which process macros in C and other languages, character strings are replaced in succession, so they cannot process processing comprising a plurality of layers at high speed. Accordingly, the conventional technologies cannot suppress a processing overhead generated each time processing passes through a layer. A device driver comprising, for example, three layers calls the three layers to perform one type of input/output processing, resulting in a long program execution time and a large program size. To achieve real-time control suitable for automobiles and the like, processing for calculation, input/output processing, and other processing must be performed individually at an optimum timing; a delay of even several microseconds is not often allowed. When layered software is implemented in an ordinary manner, functions calls and system calls are generated between each two layers and a non-negligible delay is caused. When these calls are translated into machine instructions by a compiler or the like in a microprocessor, the calling processing resulting from each call comprises one to eight instructions, taking an execution time of several microseconds to tens of microseconds. Data corresponding to connection between layers needs to be stored in a storage means such as a ROM, RAM, or disk, increasing a necessary memory capacity.

For automobile engine controllers and other systems mounted, there are requests for reducing capacities of ROMs and RAMs, which directly affect costs. Since control of these systems is performed in real time, there are also difficult requests for response speeds. These overheads become a significant problem in practical use.

An object of the present invention is to reduce person-hours taken for software modification involved in modification of hardware or a control method so as to increase application execution speeds and reduce necessary storage unit capacities.

### (Means for Solving the Problems)

The present invention, in one aspect, generates a first processing description part divided into a plurality of layers, an identifier expanding part for expanding an identifier used in the first processing description part, and a hierarchical configuration description part in which to describe the hierarchical configuration of the first processing description part, and also generates a second processing description part comprising a single layer, which results from an expansion of the hierarchical configuration of the first processing description part into a single layer in accordance with data described in the hierarchical configuration description part and the identifier expanding part.

In a preferred embodiment of the present invention, desired executable software can be obtained in a second processing description part, which is expanded into a single layer by using a first processing description part, a hierarchical configuration description part, an identifier expanding part, a preprocessor, and a compiler; in the first processing description part, processing for each layer is described by using macros representing labels defined for the each layer; in the hierarchical configuration description part, connection relationships among layers are defined by using macros representing the labels for each layer; the identifier expanding part performing macro expansion according to the hierarchical configuration description part.

In a software generating system for an automobile controller that uses a microprocessor to control an automobile, a software generating system in another aspect of the present invention comprises a means for generating a first processing description part divided into a plurality of layers, a means for generating an identifier expanding part for expanding an identifier used in the first processing description part, a means for generating a hierarchical configuration description part in which to describe the hierarchical configuration of the first processing description part, and a means for generating a second processing description part comprising a single layer, which results from an expansion of the hierarchical configuration of the first processing description part in accordance with data described in the hierarchical configuration description part and the identifier expanding part.

In the preferred embodiment of the present invention, there are provided a preprocessor for generating the second processing description part, a compiler for translating the second processing description part into an object file, and a linker for generating control software to be written in a storage unit of the automobile controller by linking the object file to an application object file.

### (Effects of the Invention)

According to the present invention, software designed as a plurality of hierarchical layers is compiled into software that includes only a single layer and thereby does not suffer an overhead between layers.

Other objects and features of the present invention will be clarified in the description of embodiments described below.

### BRIEF DESCRIPTION OF DRAWINGS

FIG. 1 shows the structures of a device driver developed according to an embodiment of the present invention as well as applications and hardware.
FIG. 2 shows the structure of an automobile engine control system in the embodiment of the present invention.
FIGs. 3A to 3D illustrate a concrete example of the upper layer (L1) in the processing description part shown in FIG. 1 in detail.
FIGs. 4A to 4D illustrate a concrete example of the lower layer (L2) in the processing description part shown in FIG. 1 in detail.
FIGs. 5A and 5B show the hierarchical configuration description part in the device driver shown in FIG. 1 in detail.
FIG. 6 shows the identifier expanding part in the device driver shown in FIG. 1 in detail.
FIG. 7 shows a development procedure in an embodiment of the present invention.
FIGs. 8A to 8D illustrate examples of source code from which the overhead between layers is eliminated according to an embodiment of the present invention.
FIG. 9 shows a development environment and a development procedure to implement a device driver generation method in an embodiment of the present invention.
FIG. 10 shows an exemplary input/output terminal list in an embodiment of the present invention.

### (Legends)

100 ... application program, 101 ... injection control application, 102 ... ignition control application, 110 ... operating system, 120 ... device driver, 121 ... intake air amount calculation (IAA), 122 ... intake air temperature calculation (IAT), 130, 201 ... microprocessor (CPU), 131 to 133, 203 ... input/output port, 140 ... application program interface (API), 150 ... hardware interface (HWI), 160 ... upper layer (L1), 170 ... lower layer (L2), 171 ... first-order filter analog input (FAI), 172 ... Vcc correction analog input (VAI), 180 ... identifier expanding part, 191 ... hierarchical configuration description part, 192 ... identifier expanding part, 200 ... control unit, 220 ... sensor actuator, 71 ... device driver program source code, 72 ... build, 73 ... device driver object file, 902 ... device driver repository, 905 ... input/output terminal list, 906 ... hierarchical configuration generator, 911 ... preprocessor, 913 ... expanded processing description part, 914 ... compiler, 916 ... device driver object file, 917 ... application source code, 918 ... application object file, 919 ... linker, 921 ... control software

### (Best Modes for Carrying Out the Invention)

Embodiments of the present invention will be described below with reference to the drawings.

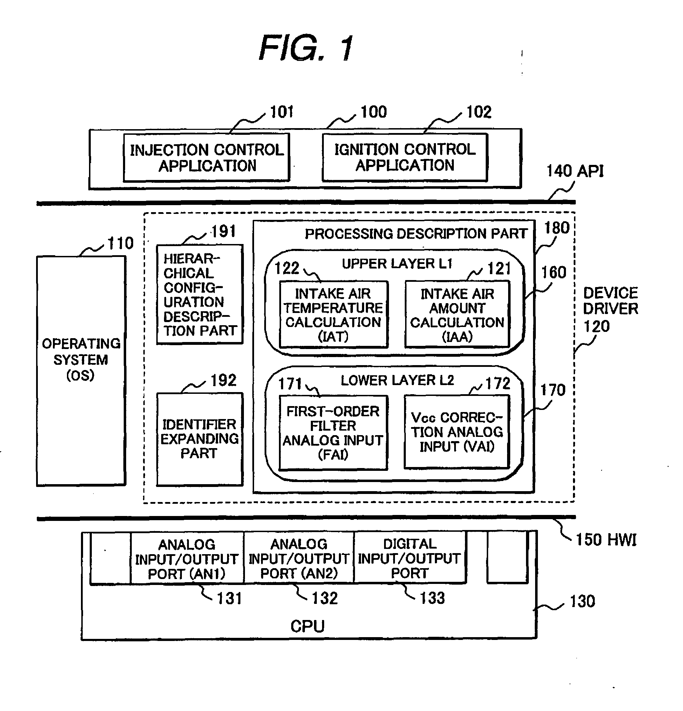

FIG. 1 shows the structures of a device driver developed according to an embodiment of the present invention as well as applications and hardware. The drawing shows an example of a device driver 120 that accepts inputs obtained from sensors through input/output ports 131 to 133 of a microprocessor 130 and uses the inputs to calculate an amount of intake air and an intake air temperature. An overview of an automobile engine control system that performs control will be first given before the device driver 120 is described in detail.

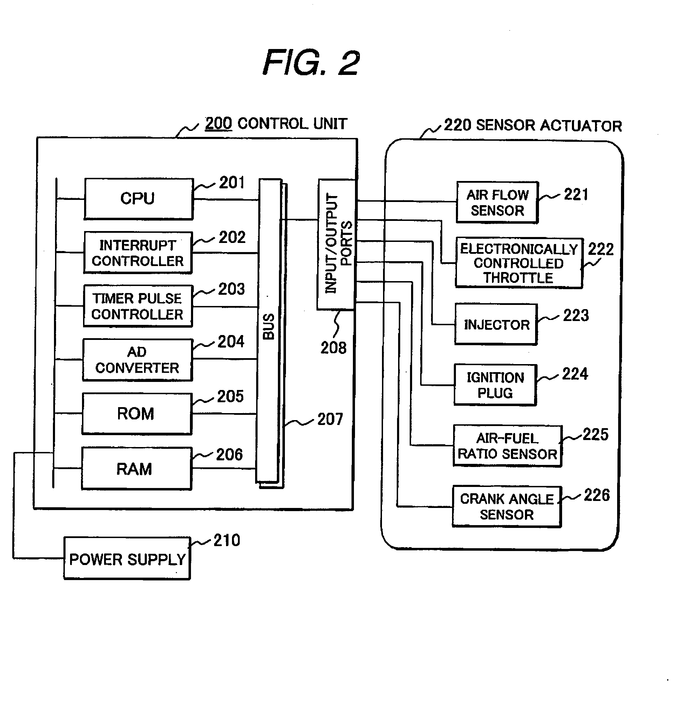

FIG. 2 shows the structure of an automobile engine control system in an embodiment of the present invention. The control unit 200 includes a CPU 201, an interrupt controller 202, a time pulse controller 203, an AD converter 204, a ROM 205, and a RAM 206. These components are interconnected through a bus 207 and make external accesses through an input/output port 208. The components 202 to 208 may be included in one device, or included in different devices and interconnected. Reference numeral 210 indicates a power supply for the control unit 200.

A sensor actuator 220 to be controlled is connected to the control unit 200 through the input/output port 208. The sensor actuator 220 comprises an air flow sensor 221, an electronically controlled throttle 222, an injector 223, an ignition plug 224, an air-to-fuel ratio sensor 225 such as a lean air fuel (LAF) sensor, and a crank angle sensor 226. The control unit 200 controls these components. Specifically, to achieve control, the CPU 201 and other components in the control unit 200 write to and read from registers in the input/output port 208. Software in which a control method is described is stored in the ROM 205 and RAM 206 in the control unit 200.

This embodiment relates to a method of generating this type of software in such a way that the software can be modified easily even when, for example, hardware is modified and that applications are executed fast and thus the capacity of memory can be reduced.

The configuration of software executed by the control unit 200 in FIG. 2 will be described with reference again to FIG. 1. Software is broadly classified into three categories, which are an application program 100, operating system (OS) 110, and device driver 120. The application program 100 sends and receives information and processing to and from the OS 110 and device driver 120 through the application program interface (API) 140. When the API 140 is standardized independently of the hardware connected, even if the hardware is modified, effects on the application program 100 can be avoided. The OS 110 and device driver 120 control the application program through a hardware interface (HWI) 150 of the input/output ports 131 to 133 etc. of the microprocessor 130.

The exemplary device driver 120 shown in the drawing performs an intake air amount calculation 121 and an intake air temperature calculation 122 according to inputs obtained from the sensors through the input/output ports 131 to 133 of the microprocessor 130. The device driver 120 accepts requests from an injection control application 101, an ignition control application 102, and the like in the application program 100 through the API 140. The CPU 130 is responsible for control of this; it performs target control by reading from and writing to the analog input/output ports 131 to 133 and the like through the HWI 150.

The device driver 120 is developed in layers by breaking down it into, for example, the upper layer (L1) 160 and lower layer (L2) 170 so that points to modify are localized. There is no restriction on the number of layers; the device driver 120 can be implemented by an appropriate number of layers according to what is responsible for control and how large the software is. The description below assumes a case in which two layers are used.

The upper layer (L1) 160 in the processing description part 180 includes the intake air amount calculation 121, intake air temperature calculation 122, and other modules that require input values needed by the application program 100. In the lower layer (L2) 170 including modules that receive input values and perform general input processing, processing to be performed is described. In the drawing, a first-order filter analog input (FAI) 171 and Vcc correction analogy input (VAI) 172 are indicated. A concrete configuration between layers that indicates which upper layer uses which lower layer is described in the hierarchical configuration description part 191. The identifier expanding part 192 is used to associate the hierarchical configuration defined in the hierarchical configuration description part 191 with the processing description part 180 to obtain desired output.

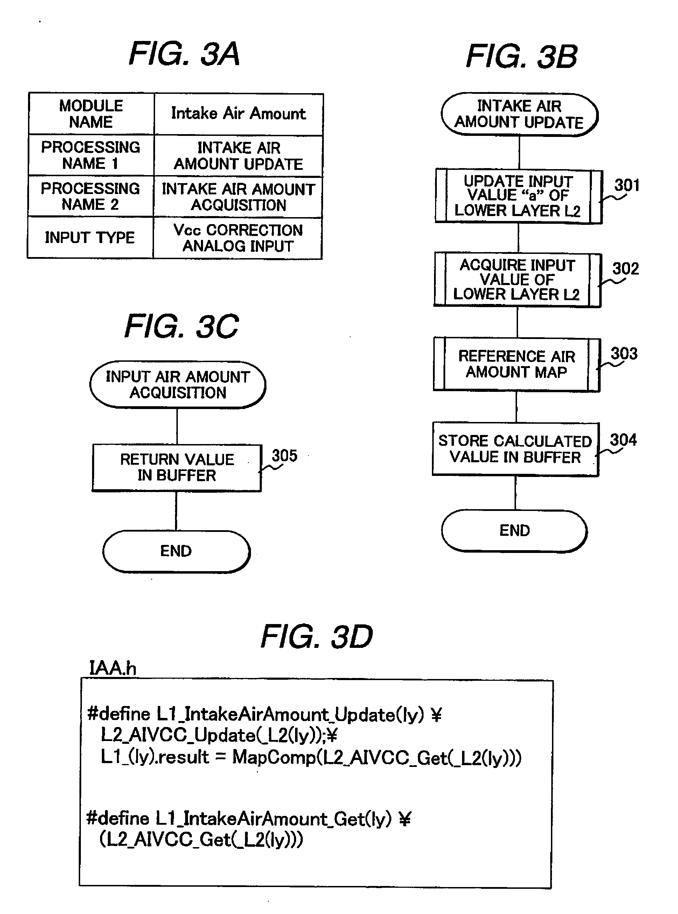

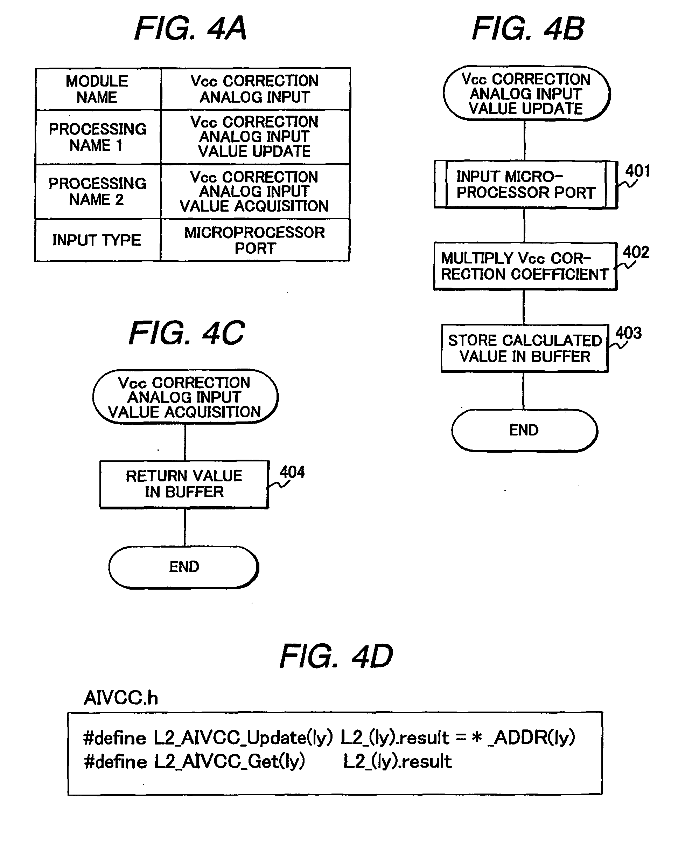

FIGs. 3A to 3D and FIGs. 4A to 4D illustrate concrete examples of the upper layer (L1) 160 and lower layer (L2) 170 in the processing description part 180, respectively, in detail. These examples will be described below.

FIGs. 3A to 3D illustrate the intake air amount calculation (IAA) 121 in the upper layer (L1) 160 shown in FIG. 1 in detail.

FIG. 3A outlines processing. As shown in the drawing, the intake air amount calculation module has intake air amount update processing named processing name 1, intake air amount acquisition processing named processing name 2, and Vcc correction analog input provided as input processing necessary for this calculation. FIG. 3B is a flowchart that schematically shows the above intake air amount update processing. FIG. 3C is also a flowchart that schematically shows the above intake air amount acquisition processing. FIG. 3D is an example of program code that implements FIGs. 3A, 3B, and 3C.

In the intake air amount calculation processing in FIG. 3B, the Vcc correction analog input (VAI) in the lower layer L2 updates an input value in step 301, and the updated value is then obtained in step 302. A map for correcting air flow sensor characteristics is used to perform correction according to the obtained value in step 303. A value obtained by the above correction is stored in a buffer in step 304.

In the intake air amount acquisition processing in FIG. 3C, the value in the above buffer is returned in step 305.

FIG. 3D shows an example of a program source in which the above processing is described with macros in C. In the macro description, a call of another module is coded as Ln_Proc(_Ln(ID)), and data reference is coded as Ls_(ID). Ln is the layer name of a module to be called, Proc is the name of processing to be called, ID is the name of the calling module, and Ls is the layer name of the calling module.

FIG. 4A to 4D illustrate the Vcc correction analog input (VAI) 172, which is an element of the lower layer (L2) 170 shown in FIG. 1, in detail.

FIG. 4A outlines processing. As shown in the drawing, the Vcc correction analog input module has Vcc correction analog input value update processing named processing name 1, Vcc correction analog input value acquisition processing named processing name 2, and input from a microprocessor port provided as an input type necessary for this processing. FIG. 4B is a flowchart for the Vcc correction analog input value update processing. FIG. 4C is also a flowchart for the Vcc correction analog input value acquisition processing. FIG. 4D is an example of source code that implements FIGs. 4A, 4B, and 4C.

In the Vcc correction analog input value update processing in FIG. 4B, Vcc is input from a microprocessor port through the hardware interface (HWI) 150 in step 401. A Vcc correction coefficient is then multiplied to obtain an updated value in step 402. The updated value obtained is stored in a buffer in step 403.

In the Vcc correction analog input value acquisition processing in FIG. 4C, the value in the above buffer is returned in step 404.

FIG. 4D shows an example of a program source in which the above processing is described with macros in C. Macros are described in the same way as in FIG. 3D.

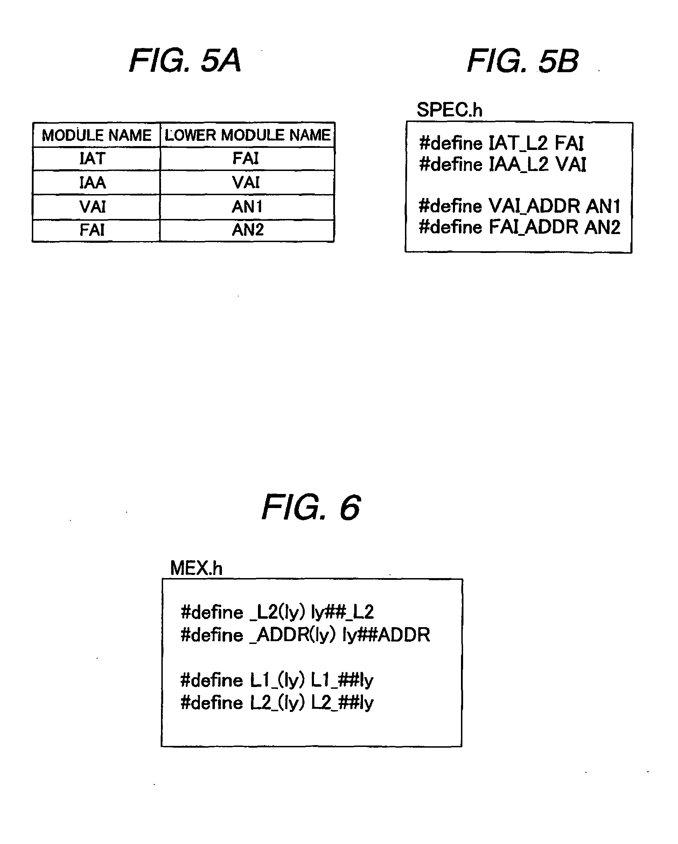

FIGs. 5A and 5B show the hierarchical configuration description part 191 in the device driver 120 shown in FIG. 1 in detail.

FIG. 5A outlines the configuration, indicating that the label names of processing modules are IAT, IAA, VAI, and FAI, and that the label names of processing modules below these processing modules are FAI, VAI, AN1, and AN2. That is, the low-order module of the intake air temperature calculation (IAT) 122 is the first-order filter analog input 171, the label of which is FAI; the low-order module of the intake air amount calculation (IAA) 121 is the Vcc correction analog input 172, the label of which is VAI; the hardware corresponding to the first-order filter analog input 171 with the label FAI is the analog input/output port, the label of which is AN2; the hardware corresponding to the Vcc correction analog input 172 with the label VAI is the analog input/output port, the label of which is AN1.

FIG. 5B shows source code of the hierarchical configuration description part 191 implemented according to the hierarchical configuration in FIG. 5A. The source code is described with macros in the form of "#define ID_Ln IDn" or "#define ID _ADDR xxxx". ID is the identifier (label) of the device driver module; IDn is the identifier (label) of another module related to the module; _ADDR is an identifier indicating a microprocessor port; xxx is a port name.

FIG. 6 shows the identifier expanding part 192 in the device driver 120 shown in FIG. 1 in detail. The identifier expanding part is in the form of "#define _Ln (ly) ly # #_Ln" "#define _ADDR (ly) ly# #_ADDR", or "#define Ln_(ly) Ln_# #ly". Ln is the name of the upper layer; ADDR is an arbitrary identifier indicating a port of the microprocessor; other symbols have the same meanings as described above. To expand macros between layers, these identifiers are replaced with the labels of other layers by using the identifier linking function "# #" in C.

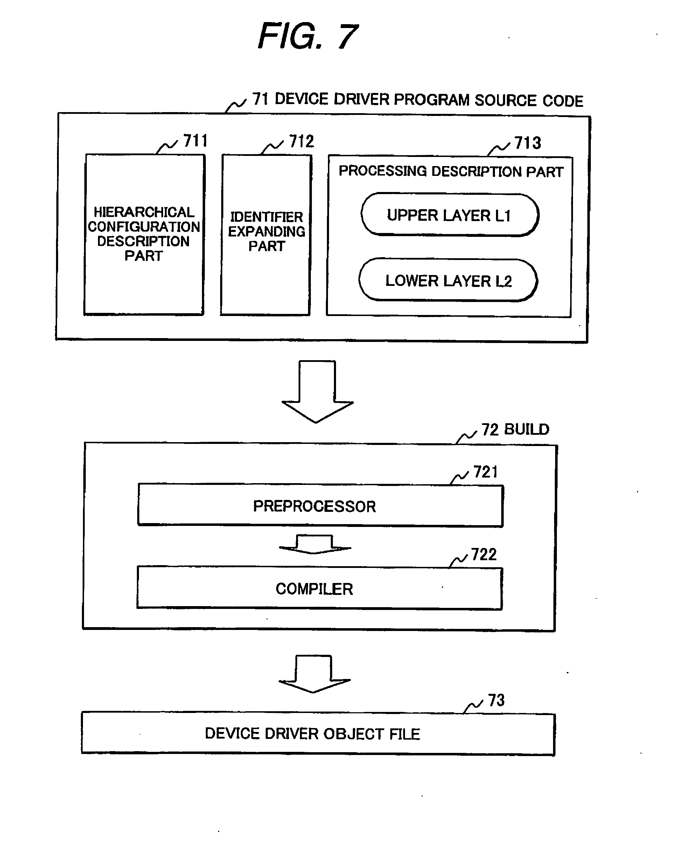

FIG. 7 shows a development procedure in which the processing description part, hierarchical configuration description part, and identifier expanding part described above are used. The hierarchical configuration description part 711, identifier expanding part 712, and processing description part 713 in the device driver program source code 71 generated as described above are passed through the build 72 to obtain a device driver object file 73. Specifically, when the preprocessor 721 and compiler 722 are used for translation into machine code, the device driver object file 73 is output. In the device driver object file 73, the processing description part generated as layers is expanded into a single layer by the preprocessor 721, eliminating the overhead between the layers.

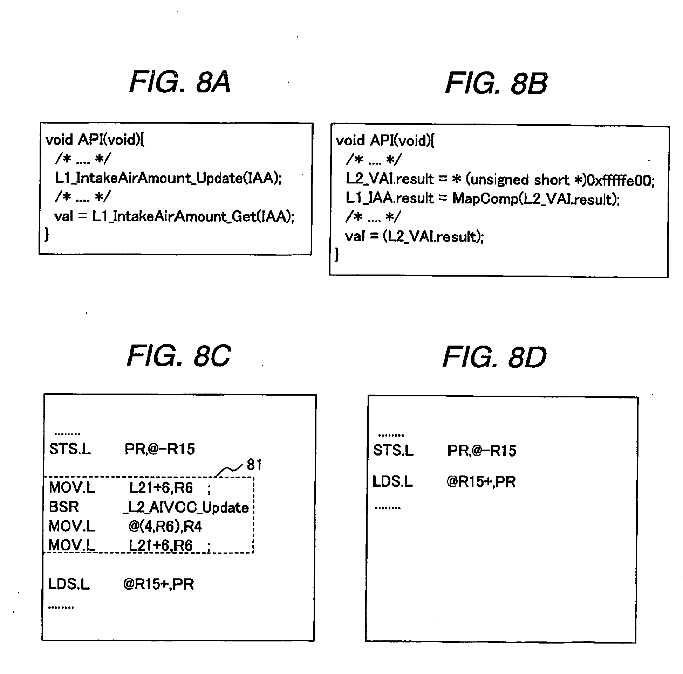

FIGs. 8A to 8D illustrate examples of source code from which the overhead between layers is eliminated according to an embodiment of the present invention. FIG. 8A shows calling source code, and FIG. 8B shows code resulting from the expansion of the source code by the preprocessor 721. When the preprocessor 721 performs macro expansion, the inter-layer calling processing in steps 301 and 302 in FIG. 3B and step 401 in FIG. 4B is expanded into a single layer. Accordingly, processing to save arguments and stack pointers used to call other layers becomes unnecessary, speeding up the processing and downsizing the code.

FIG. 8C shows machine code in the conventional technique, and FIG. 8D shows an example in which there is a reduction according to an embodiment of the present invention. Specifically, the machine code for making a call in step 301 in FIG. 3B is a part 81 enclosed by dashed lines in FIG. 8C. The part 81 can be eliminated for each inter-layer call.

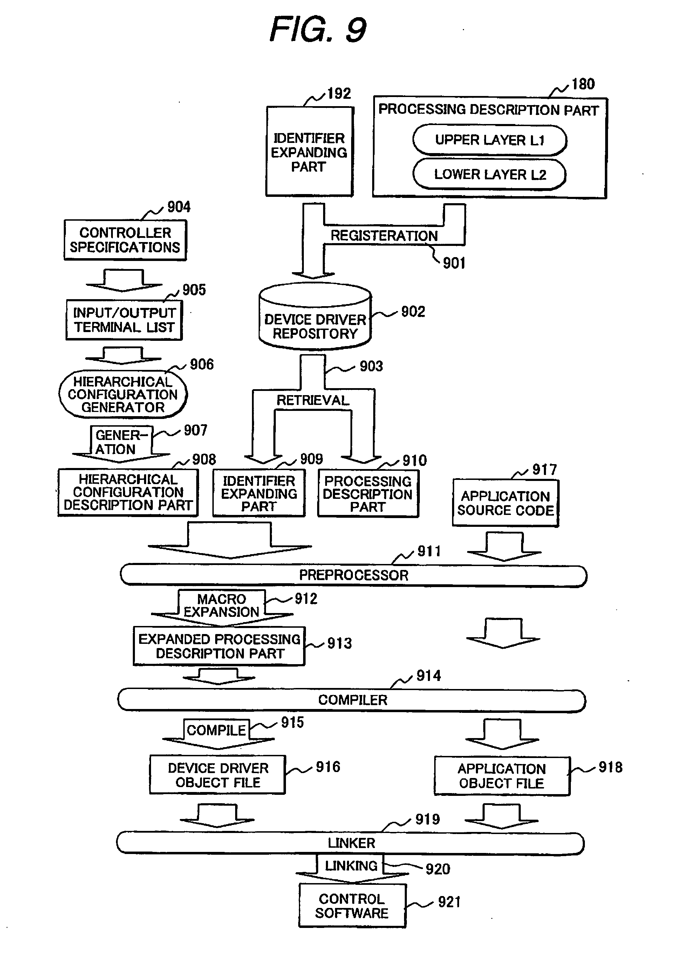

FIG. 9 shows a development environment and a development procedure to implement a device driver generation method in an embodiment of the present invention. An identifier expanding part 192 and processing description part 180 in the device driver 120, which has been already created, are registered in step 901. In step 903, a necessary identifier expanding part 192 and processing description part 180 are obtained from a device driver repository 902 in which they are stored. An input/output terminal list 905, which is part of controller specifications 904 obtained from hardware designing and describing correspondence between microprocessor ports and devices, is input. A hierarchical configuration generator 906 is then used to obtain a hierarchical configuration description part 908 in step 907. The hierarchical configuration description part 908, identifier expanding part 909, and processing description part 910 thus obtained undergo macro expansion by a preprocessor 911 in step 912. Accordingly, a processing description part 913, in which a hierarchical configuration is expanded according to the identifier expanding part 909 and hierarchical configuration description part 908, can be obtained from the processing description part 910 described by use of layers. The processing description part 913 resulting from the expansion has no hierarchical configuration, that is, comprises only a single layer, eliminating the overhead for inter-layer processing. Then, a device driver object file 916 is obtained in step 915 in which compilation is performed by a compiler 914. In step 920, the device driver object file 916 is linked by a linker 919 to an application object file 918, which results from compilation of an application source code 917, and control software 921 is then produced.

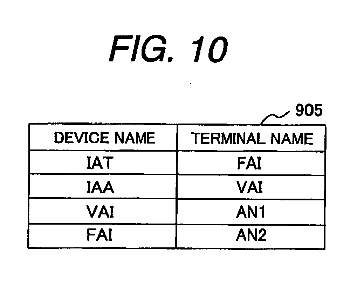

FIG. 10 shows an example of an input/output terminal list 905. The input/output terminal list 905 shows correspondence between hardware devices and control unit terminals. When this list is used to make the upper layer (L1) 160 correspond to a hardware device and the lower layer to correspond to hardware ports 131 to 133, FIG. 10 matches FIG. 5A. Accordingly, the hierarchical configuration generator 906 outputs the list in FIG. 5B. When the hierarchical configuration generator 906 is used, the processing description part 908 can be automatically generated from the input/output terminal list 905 on a computer, thereby increasing productivity. The hierarchical configuration generator 906, device driver repository 902, and compiler 914 can be implemented by use of a computer having input means, such as a keyboard, mouse, and network, an output means such as a CRT, and a storage means such as a hard disk drive.

### (Industrial Applicability)

An electronic control unit in an engine controller mounted in an automobile requires high-speed processing and high reliability and is frequently subject to hardware modifications. When the inventive software generation method and software generation system intended for a microprocessor is used in such an electronic control unit, the burden of the developer can be greatly reduced and a high applicability can be expected.

## Claims

1. A software generating method for an automobile controller that uses a microprocessor to control an automobile, the method comprising the steps of: generating a first processing description part divided into a plurality of layers; generating an identifier expanding part for expanding an identifier used in the first processing description part; generating a hierarchical configuration description part in which to describe the hierarchical configuration of the first processing description part; and generating a second processing description part comprising a single layer, which results from an expansion of the hierarchical configuration of the first processing description part in accordance with data described in the hierarchical configuration description part and the identifier expanding part.

2. A software generating method for an automobile controller that uses a microprocessor to control an automobile, the method comprising the steps of: generating a first processing description part divided into a plurality of layers; generating an identifier expanding part for expanding an identifier used in the first processing description part; and generating a second processing description part comprising a single layer, which results from an expansion of the hierarchical configuration of the first processing description part in accordance with data described in the identifier expanding part and a hierarchical configuration description part in which the hierarchical configuration of the first processing description part is described.

3. The software generating method for an automobile controller according to claim 1 or 2, wherein the hierarchical configuration description part includes the names of output terminals of the microprocessor.

4. The software generating method for an automobile controller according to claim 1 or 2, wherein the identifier expanding part includes an identifier linking instruction in a programming language.

5. The software generating method for an automobile controller according to claim 1 or 2, further comprising the step of generating the hierarchical configuration description part according to an input/output terminal list in which correspondence between hardware devices and input/output terminals of a control unit including the microprocessor is described.

6. The software generating method for an automobile controller according to claim 1 or 2, wherein the step of generating the hierarchical configuration description part includes the step of generating the hierarchical configuration description part according to an input/output terminal list described in specifications for the automobile controller.

7. The software generating method for an automobile controller according to claim 1 or 2, further comprising the steps of generating source code of an application program that is part of software executed in a control unit in the automobile controller; converting the source code of the application program into an object file; converting the second processing description part resulting from the expansion into another object file; and linking the application program and the second processing description part, which have been converted into the object files, and writing the linked object files in a storage unit in the microprocessor as control software.

8. A software generating system for an automobile controller that uses a microprocessor to control an automobile, the system comprising: a means for generating a first processing description part divided into a plurality of layers; a means for generating an identifier expanding part for expanding an identifier used in the first processing description part; a means for generating a hierarchical configuration description part in which to describe the hierarchical configuration of the first processing description part; and a means for generating a second processing description part comprising a single layer, which results from an expansion of the hierarchical configuration of the first processing description part in accordance with data described in the hierarchical configuration description part and the identifier expanding part.

9. A software generating system for an automobile controller that uses a microprocessor to control an automobile, the system comprising a preprocessor for generating an identifier expanding part for expanding an identifier used in a first processing description part divided into a plurality of layers, a hierarchical configuration description part in which the hierarchical configuration of the first processing description part is described, and a second processing description part comprising a single layer, which results from an expansion of the hierarchical configuration of the first processing description part in accordance with data described in the hierarchical configuration description part and the identifier expanding part.

10. The software generating system for an automobile controller according to claim 9, further comprising a compiler for converting the second processing description part into an object file.

11. The software generating system for an automobile controller according to claim 10, further comprising a linker for generating control software to be written in a storage unit of the automobile controller by linking the object file to an application object file.

12. The software generating system for an automobile controller according to claim 9, wherein the hierarchical configuration description part includes the names of output terminals of the microprocessor.

13. The software generating system for an automobile controller according to claim 9, wherein the identifier expanding part includes an identifier linking instruction in a programming language.

14. The software generating system for an automobile controller according to claim 9, further comprising a hierarchical configuration generator for generating the hierarchical configuration description part according to an input/output terminal list in which correspondence between hardware devices and input/output terminals of a control unit including the microprocessor is described.

15. The software generating system for an automobile controller according to claim 14, wherein the hierarchical configuration generator includes a means for generating the hierarchical configuration description part according to an input/output terminal list described in specifications for the automobile controller.

16. The software generating system for an automobile controller according to claim 9, further comprising a means for generating source code of an application program that is part of software executed in a control unit in the automobile controller; a preprocessor for converting the source code of the application program into an object file; a compiler for converting the second processing description part resulting from the expansion into another object file; a linker for linking the application program and the second processing description part, which have been converted into the object files; and a means for writing control software resulting from the linking in a storage unit in the microprocessor

17. An automobile controller that controls an automobile by using a microprocessor that executes processing according to software written in a storage unit, wherein the storage unit stores software that includes a first processing description part in which layered processing is described, a hierarchical configuration description part in which the hierarchical configuration of the first processing description part is described, an identifier expanding part for expanding an identifier, and a second processing description part comprising a single layer, which results from an expansion of the hierarchical configuration of the first processing description part in accordance with data described in the hierarchical configuration description part and the identifier expanding part.

18. A storage unit storing software of a microprocessor that executes processing in an automobile controller for controlling an automobile, the storage unit stores software that includes a first processing description part in which layered processing is described, a hierarchical configuration description part in which the hierarchical configuration of the first processing description part is described, an identifier expanding part for expanding an identifier, and a second processing description part comprising a single layer, which results from an expansion of the hierarchical configuration of the first processing description part in accordance with data described in the hierarchical configuration description part and the identifier expanding part.
